**Europäisches Patentamt**

**European Patent Office**

**Office européen des brevets**

(11) Veröffentlichungsnummer: **0 251 153**
**A2**

## (12) EUROPÄISCHE PATENTANMELDUNG

(21) Anmeldenummer: **87109010.6**

(22) Anmeldetag: **23.06.87**

(51) Int. Cl.⁴ **C04B 14/22** , C04B 40/00

(30) Priorität: **28.06.86 DE 3621838**

(43) Veröffentlichungstag der Anmeldung:
**07.01.88 Patentblatt 88/01**

(84) Benannte Vertragsstaaten:
**AT CH DE FR GB LI**

(71) Anmelder: **Witter, Rudolf, sen.**
**An der Heller 37**
**D-4815 Schloss Holte-Stukenbrock(DE)**

Anmelder: **Witter, Rudolf, jun.**
**An der Heller 37**
**D-4815 Schloss Holte-Stukenbrock(DE)**

(72) Erfinder: **Witter, Rudolf, sen.**
**An der Heller 37**
**D-4815 Schloss Holte-Stukenbrock(DE)**
Erfinder: **Witter, Rudolf, jun.**
**An der Heller 37**
**D-4815 Schloss Holte-Stukenbrock(DE)**

(74) Vertreter: **Patentanwälte TER MEER - MÜLLER**
**- STEINMEISTER**
**Artur-Ladebeck-Strasse 51**
**D-4800 Bielefeld 1(DE)**

(54) Feuerfester Beton und Verfahren zu seiner Herstellung.

(57) Durch die Verwendung von als Abfallstoff in Strahlanlagen anfallendem Glasschlackenmehl als Zuschlagstoff in Beton wird ein leichter Feinbeton geschaffen, der sich durch eine hohe Hitzebeständigkeit und Abschreckfestigkeit auszeichnet.

EP 0 251 153 A2

## FEUERFESTER BETON UND VERFAHREN ZU SEINER HERSTELLUNG

Die Erfindung betrifft einen feuerfesten Beton und ein Verfahren zu seiner Herstellung.

Wenn herkömmlicher Beton bei einem Brand, bei Schweißarbeiten oder dergleichen sehr hohen Temperaturen ausgesetzt wird, so treten in dem Material beträchtliche thermische Spannungen auf, die zu einem Nachlassen der Druckfestigkeit, zur Rißbildung und bei weiterer Temperaturerhöhung zum Abplatzen des Materials führen. Wenn das erhitzte Material plötzlich abgeschreckt wird, beispielsweise bei Löscharbeiten nach einem Brand, so werden Betonbruchstücke sehr heftig abgesprengt, so daß das Material vollständig zerstört wird und in der Umgebung der Schadenstelle eine beträchtliche Gefährdung durch die abgesprengten Bruchstücke eintritt.

Der Erfindung liegt die Aufgabe zugrunde, einen Beton oder Betonmörtel mit erhöhter Hitzebeständigkeit und Abschreckfestigkeit zu schaffen.

Diese Aufgabe wird erfindungsgemäß dadurch gelöst, das Glasschlackenmehl als Zuschlagstoff in dem Beton bzw. Betonmörtel verwendet wird.

Zwar ist es grundsätzlich bekannt, daß die Hitzebeständigkeit von Beton durch Hochofenschlacke als Zuschlagstoff erhöht werden kann, es hat sich jedoch gezeigt, daß die Verwendung von feinkörnigem Glasschlackenmehl einen besonders hitzebeständigen und abschreckfesten Beton ergibt, der selbst bei einer Erhitzung bis zum Schmelzpunkt bei etwa 3000°C und anschließendem Abschrecken mit Wasser nicht zur Rißbildung neigt.

Das Glasschlackenmehl fällt als Abfallprodukt in Strahl anlagen an, in denen die Oberflächen von Werkstücken aus Metall, Holz oder dergleichen mit Glasschlackengranulat abgestrahlt werden. Bei dem als Strahlmittel verwendeten Granulat handelt es sich beispielsweise um ein Abfallprodukt aus Kohlekraftwerken, das von der Firma Krupp-Steag Strahlmittel GmbH, Dinslaken unter der Bezeichnung "Asilikos" (Warenzeichen) vertrieben wird. Das Granulat weist eine Korngröße im Bereich von 0,25 bis 1,5mm auf. In der Strahlanlage werden die Granulat-Partikel beim Auftreffen auf die Werkstückoberfläche zu einem feinen Mehl zerschlagen. Der größte Anteil dieses Mehls besteht aus Glasschlacken-Partikeln, deren Korngröße unter 0,1mm und teilweise weit unter 0,01mm liegt. Neben einem geringen Anteil an gröberen Glasschlacken-Partikeln enthält das Glasschlackenmehl gewisse Beimengungen an Metall-, Metalloxyd- und/oder Holzstaub, deren Zusammensetzung je nach Art des abgestrahlten Materials gewissen Schwankungen unterliegt. Ein negativer Einfluß der Schwankungen der Zusammensetzung und des Anteils der Beimengungen auf die Qualität des Betons konnte nicht festgestellt werden.

Besonders gute Ergebnisse wurden mit einer Beton-Trockenmischung aus Zement und dem oben beschriebenen Glasschlackenmehl im Verhältnis von 1:3 erzielt. Für einen hitzebeständigen Beton sollte der Anteil des Glasschlackenmehls in der Trockenmasse wenigstens etwa 60 Gewichtsprozent betragen. Andererseits sollte der Gewichtsanteil an Glasschlackenmehl in der Trockenmischung nicht über 85% liegen, damit eine ausreichende mechanische Festigkeit des Betons erhalten bleibt. In der Praxis sollten die Mischungsverhältnisse von Zement und Mehl daher im Bereich von 1:2 bis 1:4 liegen. Durch einen geringen Zuschlag von etwa 0,3 bis 1% an Quarzsand kann die Festigkeit des Betons erhöht werden. Für den Zementanteil hat sich Traßzement als besonders geeignet erwiesen.

Bei einem vorteilhaften Verfahren zur Herstellung des erfin dungsgemäßen Betons oder zur Herstellung von Bauteilen aus dem erfindungsgemäßen Beton wird die Trockenmischung erdfeucht mit Wasser angesetzt und anschließend beispielsweise durch Einstampfen oder Rütteln verdichtet.

Der erfindungsgemäße Beton weist aufgrund einer äußerst geringen Wärmedehnung eine hohe Hitzebeständigkeit und Abschreckfestigkeit auf und zeichnet sich darüber hinaus durch ein verhältnismäßig geringes Gewicht, durch sehr gute wärmeisolierende Eigenschaften, eine hohe Frostbetsändigkeit und eine kurze Abbindungszeit aus. Im folgenden werden die vorteilhaften Eigenschaften eines nach einem bevorzugten Ausführungsbeispiel der Erfindung hergestellten Betons anhand einiger Versuchsbeispiele näher erläutert.

### Beispiel 1

Eine Trockenmischung aus Traßzement und Glasschlackenmehl im Verhältnis 1:3 wurde erdfeucht mit Wasser angesetzt und in eine Form eingestampft. Auf diese Weise wurde eine quadratische Betonplatte mit einer Kantenlänge von 30cm und einer Dicke von 3cm hergestellt.

Nach einer Abbindungszeit von 2 Tagen wurde die Betonplatte einseitig der Flamme eines Schweißbrenners ausgesetzt. Die Flamme wurde zunächst so weit an die Betonoberfläche angenähert, daß der Flammenkern unmittelbar vor der Betonoberfläche endete. Die Flammentemperatur an der Betonoberfläche betrug dabei etwa 2800°C. An der Oberfläche der Betonplatte ergaben sich selbst dann keine Veränderungen, wenn die Flamme über mehrere Minuten auf dieselbe Stelle gehalten wurde.

Beispiel 2

Unmittelbar im Anschluß an den in Beispiel 1 beschriebenen Versuch wurde die Flamme näher an die Betonplatte gehalten, so daß der Flammenkern mit einer Temperatur von etwa 3000 bis 3200°C die Betonoberfläche erreichte. Es wurde ein leichtes Aufschmelzen der Betonoberfläche unter Bildung einer glasigen Schlacke beobachtet. Mit dem Schweißbrenner wurde eine "Schweißnaht" quer über die Oberfläche der Betonplatte gezogen. An der Betonplatte trat weder eine sichtbare Rißbildung noch ein Abplatzen von Betonbruchstücken ein.

Beispiel 3

Im Anschluß an den in Beispiel 2 beschriebenen Versuch wurde die "Schweißnaht" etwa 5 Minuten lang mit dem Schweißbrenner behandelt, so daß das Oberflächenmaterial der Schweißnaht ständig etwa auf der Schmelztemperatur gehalten wurde. Durch das Aufschmelzen des Materials wurde die Dicke der Betonplatte im Bereich der "Schweißnaht" etwa auf 2,5cm verringert. Während der Behandlung mit dem Schweißbrenner wurde mit einer Sonde die Temperatur auf der Rückseite der Betonplatte in einer der Schweißnaht unmittelbar gegenüberliegenden Position gemessen. Nach 5-minütiger Behandlung wurde eine Temperatur von 28°C gemessen. Durch einen Berührungstest wurde bestätigt, daß die Betonoberfläche auf der Rückseite der Platte nur handwarm war.

Beispiel 4

Unmittelbar im Anschluß an die Behandlung der Betonplatte mit dem Schweißbrenner gemäß Beispielen 1 bis 3 wurde die Betonplatte mit etwa 101 Wasser übergossen, das eine Temperatur von ca. 22°C hatte. Es wurde weder eine Rißbildung noch ein Abplatzen von Material beobachtet.

Beispiel 5

Eine gemäß Beispiel 1 hergestellte Betonplatte wurde nach etwa 2-tägigem Aushärten 2 Tage lang im Gefrierschrank bei einer Temperatur von -22°C aufbewahrt. Die durchgefrorene Platte wurde einseitig auf ganzer Fläche mit der etwa 1800°C heißen Flamme eines Bunsenbrenners behandelt. Nach etwa 3 Minuten begann die Reifschicht auf der Rückseite der Platte zu tauen, und an einzelnen Stellen der Oberfläche an der Rückseite der Platte wurde der Austritt von Schmelzwasser aus den Poren des Betons beobachtet. Nach 10-minütiger einseitiger Behandlung mit dem Bunsenbrenner und anschließendem Abschrecken mit Wasser wies die Platte keinerlei Risse oder Beschädigungen auf.

Beisiel 6

Aus einer erdfeuchten Betonmischung aus Zement und Glasschlackemehl im Verhältnis 1:3 wurde durch Einstampfen in eine Form ein würfelförmiger Probekörper mit einer Kantenlänge von 20cm hergestellt und nach einer Aushärtungszeit von 5 Tagen einer Baustoffprüfung unterzogen. Der Probekörper hatte eine Festbetonrohdichte von 1,875 kg/m$^3$, und bei einem Bruchfestigkeitstest wurde eine Bruchlast von 380 kN ermittelt, was einer Druckfestigkeit von 9,5 N/mm$^2$ entspricht.

**Ansprüche**

1. Verwendung von Glasschlackenmehl als Zuschlagstoff in Beton oder Betonmörtel.

2. Verwendung von Glasschlackenmehl, das in Strahlanlagen als Abfallprodukt beim Abstrahlen von Oberflächen mit Glasschlackengranulat anfällt, als Zuschlagstoff in Beton oder Betonmörtel.

3. Feuerfester Beton, dadurch **gekennzeichnet**, daß die Trockenmischung zu wenigstens 60 Gewichtsprozent und höchstens 85 Gewichtsprozent aus Glasschlackenmehl und im übrigen überwiegend aus Zement besteht.

4. Beton nach Anspruch 3, dadurch **gekennzeichnet**, daß der Anteil an Glasschlackenmehl in der Trockenmasse zwischen 70 und 80%, vorzugsweise bei 75% liegt.

5. Beton nach Anspruch 3 oder 4, dadurch **gekennzeichnet**, daß die Trockenmasse ausschließlich aus Glasschlackenmehl und Zement besteht.

6. Beton nach Anspruch 3 oder 4, **gekennzeichnet** durch einen Quarzsand-Zuschlag von maximal 1%, vorzugsweise 0,3%.

7. Beton nach einem der Ansprüche 3 bis 6, dadurch **gekennzeichnet,** daß der Zement Traßzement ist.

8. Verfahren zur Herstellung von Beton oder Bauteilen aus Beton gemäß einem der Ansprüche 3 bis 7, dadurch **gekennzeichnet,** daß die Trockenmasse nach dem Mischen erdfeucht mit Wasser angesetzt und anschließend verdichtet wird.